Europäisches Patentamt

European Patent Office

Office européen des brevets

(19)

(11) Veröffentlichungsnummer: **0 038 969**
**B1**

# (12) EUROPÄISCHE PATENTSCHRIFT

(45) Veröffentlichungstag der Patentschrift:
04.05.83

(21) Anmeldenummer: **81102679.8**

(22) Anmeldetag: **09.04.81**

(51) Int. Cl.³: **B 01 D 53/34,** B 01 D 53/14,
C 10 K 1/12, C 01 B 17/05

(54) Verfahren zum Behandeln einer wässrigen alkalischen Lösung von Salzen der Anthrachinondisulfonsäure.

(30) Priorität: **26.04.80 DE 3016240**

(43) Veröffentlichungstag der Anmeldung:
**04.11.81 Patentblatt 81/44**

(45) Bekanntmachung des Hinweises auf die Patenterteilung:
**04.05.83 Patentblatt 83/18**

(84) Benannte Vertragsstaaten:
**BE DE FR GB NL SE**

(56) Entgegenhaltungen:
**DE-A-2 242 702**
**DE-A-2 552 979**
**DE-B-2 355 839**
**GB-A-1 459 753**
**GB-A-1 495 928**
**US-A-3 966 876**
**US-A-3 972 989**
**US-A-4 083 945**

(73) Patentinhaber: **Linde Aktiengesellschaft,
Abraham-Lincoln-Strasse 21, D-6200 Wiesbaden (DE)**

(72) Erfinder: **Weber, Günter, Dr., Bergerweg 6,
D-8151 Linden (DE)**

(74) Vertreter: **Schaefer, Gerhard, Dr., Linde
Aktiengesellschaft Zentrale Patentabteilung,
D-8023 Höllriegelskreuth (DE)**

## Verfahren zum Behandeln einer wäßrigen alkalischen Lösung von Salzen der Anthrachinondisulfonsäure

Die Erfindung betrifft ein Verfahren zum Behandeln einer wäßrigen Lösung von Salzen der Anthrachinondisulfonsäure, die aus einer Wäsche zur Entfernung von schwefelhaltigen Verbindungen wie Schwefelwasserstoff aus Gasgemischen stammt und im Zuge der Wäsche gebildete unerwünschte Verbindungen, insbesondere Alkalisulfate, enthält, wobei ein Teilstrom der Lösung einer unter reduzierenden Bedingungen stattfindenden Verbrennung unterzogen wird.

Bei einer derartigen Wäsche dienen die in der wäßrigen alkalischen Lösung der Waschflüssigkeit, enthaltenen Salze der Anthrachinondisulfonsäure oder Anthrachinondisulfonate zusammen mit Vanadium als Oxidationsmittel, die im Zuge der ablaufenden chemischen Reaktionen selbst reduziert werden. Zur Wiederherstellung ihrer Wirksamkeit findet anschließend eine Rückoxidation mit Hilfe von Sauerstoff oder einem sauerstoffhaltigen Gas statt. Der in den von der Waschflüssigkeit absorbierten Verbindungen enthaltene Schwefel wird schließlich in elementarer Form gewonnen und die regenerierte Waschflüssigkeit in die Wäsche zurückgeführt.

Im Zuge der Wäsche, insbesondere infolge der Zuführung von Sauerstoff, laufen gewisse Nebenreaktionen ab, die zur Bildung von teilweise unerwünschten Verbindungen führen. Dazu gehören vor allem Alkalisulfate, deren Konzentration in der umlaufenden Waschflüssigkeit nicht beliebig ansteigen darf. Um die gebildeten Nebenprodukte zu entfernen, wird daher ein entsprechend bemessener Anteil der Waschflüssigkeit vom Hauptstrom abgezweigt und einer besonderen Behandlung unterzogen. Diese besteht in einer unter reduzierenden Bedingungen stattfindenden Verbrennung, bei der die Nebenprodukte zu Alkalicarbonaten, Alkalihydrogencarbonaten sowie zu Hydrogensulfiden und/oder Sulfiden umgesetzt werden. Das aus der Verbrennung stammende, diese Verbindungen enthaltende flüssige Verbrennungsprodukt kann anschließend in den Hauptstrom der Waschflüssigkeit zurückgeführt werden, da die störenden Nebenprodukte nunmehr umgesetzt sind.

Außer den Alkalisulfaten können im Zuge der Wäsche auch Alkalithiosulfate gebildet werden, die dann, entsprechend ihrem Anteil in der vom Hauptstrom abgezweigten Waschflüssigkeit, bei der Verbrennung ebenfalls weitgehend zersetzt werden. Die Sulfate und Thiosulfate können, je nach den speziellen Verfahrensbedingungen, in stark unterschiedlichen Mengenverhältnissen gebildet werden. So kann es auch vorkommen, daß Thiosulfatbildung gar nicht oder nur in sehr geringem Ausmaß auftritt.

Wie sich jedoch herausgestellt hat, ist letzteres im Zusammenhang mit der Aufrechterhaltung der Anthrachinondisulfonat-Konzentration in der umlaufenden Waschflüssigkeit von Bedeutung. Die Anthrachinondisulfonate werden nämlich aus bisher noch nicht restlos geklärten Gründen allmählich zersetzt, so daß eine ständige oder in regelmäßiger Wiederholung vorzunehmende Neuzufuhr dieser relativ teuren Substanzen erforderlich wird. Sind jedoch Thiosulfate in entsprechenden Mengen in der Waschflüssigkeit vorhanden, so geht das Ausmaß der Anthrachinondisulfonat-Zersetzung merklich zurück und läßt sich unter Umständen gänzlich stoppen.

Bisher war es aber nicht immer möglich, eine ausreichende Thiosulfatkonzentration in der umlaufenden Waschflüssigkeit herzustellen bzw. aufrechtzuerhalten, insbesondere wenn im Zuge der Wäsche gar keine oder nur sehr geringe Thiosulfatmengen gebildet wurden.

Der Erfindung liegt daher die Aufgabe zugrunde, ein Verfahren der eingangs genannten Art bereitzustellen, das geeignet ist, die Neigung der in der umlaufenden Waschflüssigkeit vorhandenen Anthrachinondisulfonate zur Zersetzung so weitgehend und zuverlässig wie möglich zu unterdrücken.

Diese Aufgabe wird gemäß der Erfindung dadurch gelöst, daß das aus der Verbrennung stammende flüssige Verbrennungsprodukt mit einem sauerstoffhaltigen Gas in Kontakt gebracht wird, um in jenem enthaltene Alkalisulfide und/oder Alkalihydrogensulfide zu Alkalithiosulfat umzusetzen, und danach in die Lösung zurückgeführt wird.

Die Erfindung ermöglicht es demnach, jederzeit die zur Unterdrückung der Anthrachinondisulfonat-Zersetzung erforderlichen Thiosulfatmengen bereitzustellen. Dies geschieht auf verfahrenstechnisch sehr einfachem Wege und ohne daß zusätzliche chemische Substanzen oder Inhibitoren eingeführt werden müßten. Die im Zuge des Verfahrens sowieso gebildeten chemischen Verbindungen werden optimal zur Erfüllung des durch die Aufgabenstellung umrissenen Zweckes genützt. Es ist lediglich die Bereitstellung von Sauerstoff erforderlich, der im Gesamtverfahren ohnehin benötigt wird, nämlich bei der Rückoxidierung der im Zuge der Wäsche reduzierten Oxidationsmittel. Zur Durchführung der erfindungsgemäßen Maßnahme kann Luft zugeführt und, falls nicht umgesetzter Sauerstoff verbleibt, anschließend bei der erwähnten Rückoxidation weiter genutzt werden.

Der Vergleich mit bekannten einschlägigen Verfahren macht besonders deutlich, daß die Erfindung eine sehr einfache und vorteilhafte Lösung der vorliegenden Problemstellung darstellt. Bei allen diesen Verfahren werden nämlich Fremdsubstanzen zugeführt, um die durch Zersetzung bedingten Verluste an Anthrachinondisulfonaten zu verhindern. Gemäß der GB-A 1 488 659 sind dies aromatische Polyhydroxyd-

verbindungen, beispielsweise Phenol und Hydrochinon oder Kresole, gemäß der US-A-4 060 594 anorganische Fluoride, Borate oder Phosphate und gemäß der US-A-4 017 594 Thiocyanat bildende Substanzen.

In einer besonders vorteilhaften Ausgestaltung des erfindungsgemäßen Verfahrens wird das flüssige Verbrennungsprodukt in Gegenwart von Salzen der Anthrachinondisulfonsäure umgesetzt, da sich herausgestellt hat, daß in einem solchen Fall die Thiosulfatbildung wesentlich beschleunigt wird. Auch bei dieser Verfahrensweise ist es nicht erforderlich, Fremdsubstanzen zuzuführen, da die genannten Salze ohnehin in der Waschflüssigkeit enthalten sind. Es ist deshalb möglich, die flüssigen Verbrennungsprodukte beispielsweise mit einem weiteren, der Verbrennung nicht zugeführten Teilstrom der Lösung zu vermischen und dann der Sauerstoffbehandlung zu unterziehen. Es hat sich gezeigt, daß es dabei günstig ist, etwa gleichgroße Mengen von flüssigem Verbrennungsprodukt und unbehandelter Waschflüssigkeit miteinander zu vermischen.

Die im erfindungsgemäßen Verfahren erzeugbare Menge an Thiosulfat ist zunächst durch die im flüssigen Verbrennungsprodukt enthaltene Menge an Sulfiden und/oder Hydrogensulfiden begrenzt. Durch Zugabe von elementarem Schwefel, der in der Schwefelwasserstoffwäsche ohnehin gebildet wird, läßt sich diese Limitierung jedoch aufheben, so daß praktisch jede gewünschte Menge an Thiosulfat erzeugt werden kann.

Bei der Verbrennung des Teilstroms der Lösung werden nicht nur die unerwünschten Nebenprodukte, insbesondere Alkalisulfate, zersetzt, sondern auch die im Waschprozeß erwünschten Salze der Anthrachinondisulfonsäure. Um dies zu verhindern, ist bereits vorgeschlagen worden, diese Salze vor der Verbrennung abzutrennen, was beispielsweise durch Adsorption erfolgen kann. In Verbindung mit einem derartigen Verfahren ist eine besonders günstige Ausgestaltung der Erfindung darin zu sehen, daß die abgetrennten Salze der Anthrachinondisulfonsäure dem flüssigen Verbrennungsprodukt wieder zugemischt werden, bevor die Umsetzung mit Sauerstoff erfolgt.

Es hat sich als zweckmäßig erwiesen, die gemäß der Erfindung vorgesehene Umsetzung bei Temepraturen zwischen 20 und 100° C und bei pH-Werten von mindestens 8 durchzuführen. Besonders bevorzugt sind die Bereiche zwischen 40 und 90° C sowie oberhalb von pH 9. Innerhalb der genannten Temperatur- und pH-Wert-Bereiche findet eine weitgehend quantitative Umsetzung der Alkalisulfide statt. Außerdem liegt das flüssige Verbrennungsprodukt hinsichtlich Temperatur und pH-Wert normalerweise sowieso innerhalb der genannten Wertbereiche.

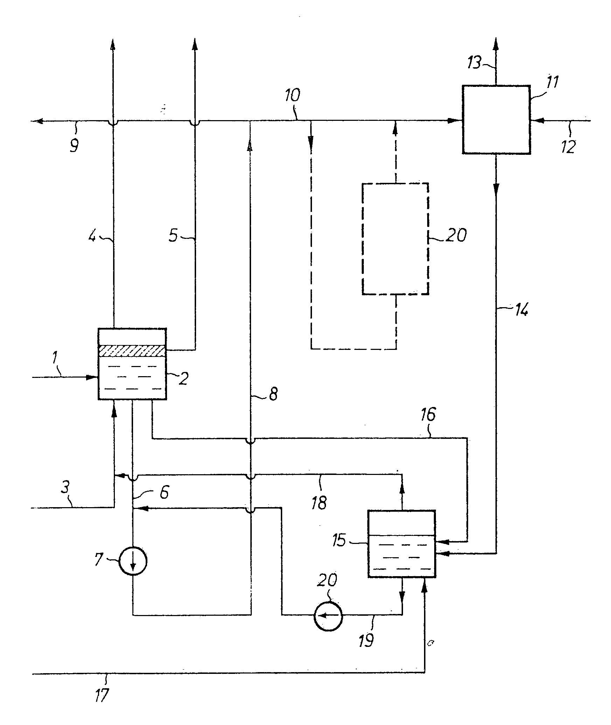

Anschließend wird ein Ausführungsbeispiel des erfindungsgemäßen Verfahrens mit Hilfe der Figur näher erläutert.

Die Figur zeigt in schematischer Darstellung ein Verfahren zur Behandlung eines Waschflüssigkeits-Teilstroms, der aus einer Gaswäsche zur Entfernung von Schwefelwasserstoff stammt.

Durch eine Leitung 1 wird eine aus einer Schwefelwasserstoffwäsche stammende Waschflüssigkeit herausgeführt, die eine wäßrige alkalische, suspendierten Schwefel, Alkalivanadat, Alkalianthrachinondisulfonat sowie Produkte vorausgegangener chemischen Nebenreaktionen enthaltende Lösung darstellt. Diese Lösung gelangt in einen Oxidationsbehälter 2, wo sie mit einem sauerstoffhaltigen Gas, etwa durch eine Leitung 3 eingeführter Luft, in Berührung gebracht wird. Der aus dem ausgewaschenen Schwefelwasserstoff gebildete elementare Schwefel sammelt sich an der Oberfläche der flüssigen Phase an und wird über eine Leitung 5 abgezogen. Über eine Leitung 4 wird an Sauerstoff verarmte Luft weggeführt.

Die regenerierte Waschflüssigkeit wird aus dem Oxidationsbehälter durch eine Leitung 6 mittels einer Pumpe 7 abgezogen und über Leitungen 8 und 9 in die Wäsche zurückgeführt. Diese Waschflüssigkeit ist eine alkalische wäßrige Lösung, die beispielsweise 14,5 Gew.-% Natriumsulfat, 1,9 Gew.-% Natriumthiosulfat, 2,2 Gew.-% Natriumhydrogencarbonat, 0,3 Gew.-% Natriumcarbonat, 0,1 Gew.-% Natriumvanadat und 0,2 Gew.-% Natriumanthrachinondisulfonat enthält. Das Natriumsulfat und das Natriumthiosulfat sind Produkte von unvermeidlichen Nebenreaktionen.

Um den Natriumsulfatgehalt in der Waschflüssigkeit zu begrenzen, wird über eine Leitung 10 ständig ein verhältnismäßig kleiner Anteil der Waschflüssigkeit abgezweigt und in eine Brennkammer 11 eingeführt. Dort findet unter Zufuhr eines Brenngases durch eine Leitung 12 eine Verbrennung unter reduzierenden Bedingungen statt. Ein schwefelwasserstoffhaltiges Gas wird über eine Leitung 13 abgezogen und gegebenenfalls in das der Wäsche zuzuführende Rohgas zurückgeführt. Ein flüssiges Verbrennungsprodukt wird über eine Leitung 14 entnommen und in einen Reaktionsbehälter 15 eingeführt. Das flüssige wäßrige Verbrennungsprodukt enthält nur noch 1,7 Gew.-% Natriumsulfat und 0,1 Gew.-% Natriumthiosulfat, hingegen 4,0 Gew.-% Natriumhydrogensulfid sowie weiterhin 3,7 Gew.-% Natriumhydrogencarbonat und 6,9 Gew.-% Natriumcarbonat. Der Vanadiumgehalt ist nahezu unverändert, während das Natriumanthrachinondisulfonat in der Brennkammer zersetzt wird. Die Temperatur des flüssigen Verbrennungsproduktes liegt bei 90° C, der pH-Wert bei 10.

Das flüssige Verbrennungsprodukt wird in den Reaktionsbehälter 15 mit einem aus dem Oxidationsbehälter 2 über Leitung 16 abgezogenen Teilstrom der regenerierten Waschflüssigkeit vermischt. Die Mengen der dem Behälter 15 über die Leitungen 14 und 16 zugeführten Flüssigkeiten sind ungefähr gleich groß. Das im Behälter 15 gebildete Gemisch wird mit über eine Leitung 17 herangeführter Luft in Kontakt gebracht und das Natriumhydrogensulfid wird dabei durch Reaktion mit dem Luftsauerstoff nahezu quantitativ zu Natriumthiosulfat umgesetzt. Dessen Anteil in der Lösung steigt damit auf 3,8 Gew.-% während der des Natriumhydrogensulfids nahezu auf Null zurück geht und die übrigen Komponenten in ihrer Konzentration weitgehend unverändert bleiben. An Sauerstoff verarmte und etwas schwefelwasserstoffhaltige Luft wird über eine Leitung 18 in den Oxidationsbehälter 2 abgeführt. Die mit Natriumthiosulfat angereicherte Lösung wird mittels einer Pumpe 20 über eine Leitung 19 abgezogen und in den Waschflüssigkeitsstrom zurückgeführt.

Um die Zersetzung des Natriumanthrachinondisulfonats in der Brennkammer 11 zu vermeiden, kann dieses in einer vorgeschalteten Adsorptionsanlage 20 abgetrennt werden. Nach einer Regenerierung der Adsorptionsschüttung mit Wasser ergibt sich eine Flüssigkeit, die im wesentlichen nur das abgetrennte Natriumanthrachinondisulfonat enthält. Wird diese Lösung anstelle der über Leitung 16 herangeführten regenerierten Waschlösung mit dem flüssigen Verbrennungsprodukt gemischt und umgesetzt, kann dies unter Umständen günstige Auswirkungen auf die Dimensionierung des Behälters 15 haben. Dieser kann nämlich bei einer erhöhten Konzentration des Natriumantrachinondisulfonats in dieser Lösung entsprechend kleiner ausfallen.

## Patentansprüche

1. Verfahren zum Behandeln einer wäßrigen alkalischen Lösung von Salzen der Anthrachinondisulfonsäure, die aus einer Wäsche zur Entfernung von schwefelhaltigen Verbindungen wie Schwefelwasserstoff aus Gasgemischen stammt und im Zuge der Wäsche gebildete unerwünschte Verbindungen, insbesondere Alkalisulfate, enthält, wobei ein Teilstrom der Lösung einer unter reduzierenden Bedingungen stattfindenden Verbrennung unterzogen wird, dadurch gekennzeichnet, daß das aus der Verbrennung stammende flüssige Verbrennungsprodukt mit einem sauerstoffhaltigen Gas in Kontakt gebracht wird, um in jedem enthaltene Alkalisulfide und/oder Alkalihydrogensulfide zu Alkalithiosulfat umzusetzen, und danach in die Lösung zurückgeführt wird.

2. Verfahren nach Anspruch 1, dadurch gekennzeichnet, daß das flüssige Verbrennungsprodukt in Gegenwart von Salzen der Anthrachinondisulfonsäure umgesetzt wird.

3. Verfahren nach Anspruch 2, dadurch gekennzeichnet, daß das flüssige Verbrennungsprodukt gemeinsam mit einem weiteren Teilstrom der Lösung umgesetzt wird.

4. Verfahren nach Anspruch 2, dadurch gekennzeichnet, daß vor der Verbrennung des Teilstroms der Lösung eine selektive Abtrennung der Salze der Anthrachinondisulfonsäure vorgenommen wird und daß das flüssige Verbrennungsprodukt gemeinsam mit den dabei abgetrennten Salzen der Anthrachinondisulfonsäure umgesetzt wird.

5. Verfahren nach einem der Ansprüche 1 bis 4, dadurch gekennzeichnet, daß dem flüssigen Verbrennungsprodukt zusätzlich elementarer Schwefel zugesetzt wird.

6. Verfahren nach einem der Ansprüche 1 bis 5, dadurch gekennzeichnet, daß die Umsetzung bei Temperaturen zwischen 20 und 100°C, insbesondere zwischen 40 und 90°C, und bei pH-Werten von mindestens 8, insbesondere von mindestens 9 durchgeführt wird.

## Claims

1. A process for treating an aqueous alkaline solution of salts of anthraquinonedisulphonic acid which comes from a washing step for removing sulphurcontaining compounds, such as hydrogen sulphide, from gas mixtures and contains undesired compounds, in particular alkali sulphates, which are formes in the course of the washing step, wherein a sub-stream of the solution is subjected to a combustion taking place under reducing conditions, characterised in that the liquid combustion product which comes from the combustion is brought into contact with an oxygencontaining gas in order to convert alkali sulphides and/or alkali hydrogen sulphides which are contained in the combustion product into alkali thiosulphates, and is subsequently returned to the solution.

2. A process as claimed in claim 1, characterised in that the liquid combustion product is converted in the presence of salts of anthraquinonedisulphonic acid.

3. A process as claimed in Claim 2, characterised in that the liquid combustion product is converted, together with a further sub-stream of the solution.

4. A process as claimed in Claim 2, characterised in that, prior to the combustion of the sub-stream of the solution, a selective separation of the salts of anthraquinonedisulphonic acid is effected; and that the liquid combustion product is converted together with the salts of the anthraquinonedisulphonic acid which are thereby separated.

5. A process as claimed in one of Claims 1 to 4, characterised in that elementary sulphur is additionally added to the liquid combustion product.

6. A process as claimed in one of Claims 1 to 5, characterised in that the conversion is carried out at temperatures of between 20 and 100°C, in particular between 40 and 90°C, and at pH-values of at least 8, in particular of at least 9.

## Revendications

1. Procédé de traitement d'une solution alcaline aqueuse de sels de l'acide anthraquinonedisulfonique, provenant d'un lavage destiné à éliminer de mélanges gazeux des composés contenant du soufre, par exemple de l'hydrogène sulfuré, et contenant des composés indésirables, en particulier des sulfates alcalins, formés lors du lavage, dans lequel un courant partiel de la solution est soumis à une combustion réalisée dans des conditions réductrices, caractérisé en ce que le produit de combustion liquide sortant de la combustion est mis en contact avec un gaz contenant de l'oxygène pour convertir en thiosulfate alcalin les sulfures et/ou hydrogénosulfures alcalins qui y sont contenus, et en ce qu'on le renvoie ensuite dans la solution.

2. Procédé selon la revendication 1, caractérisé en ce que le produit de combustion liquide est converti en présence de sels de l'acide anthraquinonedisulfonique.

3. Procédé selon la revendication 2, caractérisé en ce que le produit de combustion liquide est converti en même temps qu'un autre courant partiel de la solution.

4. Procédé selon la revendication 2, caractérisé en ce que l'on effectue avant la combustion du courant partiel de la solution une séparation sélective des sels de l'acide anthraquinonedisulfonique, et en ce que le produit de combustion liquide est converti en même tamps que les sels de l'acide anthraquinonedisulfonique qui sont ainsi séparés.

5. Procédé selon l'une quelconque des revendications 1 à 4, caractérisé en ce que l'on ajoute en outre du soufre élémentaire au produit de combustion liquide.

6. Procédé selon l'une quelconque des revendications 1 à 5, caractérisé en ce que la conversion est réalisée à des températures comprises entre 20 et 100°C, plus particulièrement entre 40 et 90°C, et à un pH d'au moins 8, plus particulièrement d'au moins 9.

0 038 969

7